Europäisches Patentamt

European Patent Office

Office européen des brevets

(19)

(11) Publication number: **0 110 597**
**B1**

# (12) EUROPEAN PATENT SPECIFICATION

(45) Date of publication of patent specification: **29.07.87**

(21) Application number: **83306828.1**

(22) Date of filing: **09.11.83**

(51) Int. Cl.⁴: **B 60 C 9/00,** B 60 C 9/20

(54) **Pneumatic radial tires.**

(30) Priority: **09.11.82 JP 195332/82**

(43) Date of publication of application:
**13.06.84 Bulletin 84/24**

(45) Publication of the grant of the patent:
**29.07.87 Bulletin 87/31**

(84) Designated Contracting States:
**BE DE FR GB IT NL SE**

(56) References cited:
**AU-B- 519 400**
**FR-A-1 579 586**
**GB-A-1 510 328**
**GB-A-2 081 765**

**TECHNISCHE MITTEILUNGEN KRUPP.
FORSCHUNGSBERICHTE, vol. 39, no. 3,
December 1981, pages 125-133, ESSEN (DE), J.
FLÜGGE et al.: "Verhalten von unlegiertem
Stahldraht mit 0,8% C bei der Kaltumformung
durch Ziehen"**

(73) Proprietor: **BRIDGESTONE TIRE COMPANY
LIMITED
10-1, Kyobashi 1-Chome Chuo-Ku
Tokyo (JP)**

(72) Inventor: **Ogino, Takao
870-5 Shimoarai
Tokorozawa City Saitama Pref. (JP)**
Inventor: **Watanabe, Yoichi
29-1, Onta-Cho 2-Chome
Higashi-murayama City Tokyo (JP)**
Inventor: **Sano, Shigehisa
1584-12, Ninomiya
Akigawa City Tokyo (JP)**

(74) Representative: **Whalley, Kevin et al
MARKS & CLERK 57/60 Lincoln's Inn Fields
London WC2A 3LS (GB)**

**Description**

This invention relates to pneumatic radial tires, and more particularly to highly durable pneumatic radial tires having improved corrosion fatigue resistance of steel filaments constituting the steel cord used as tire reinforcement.

By means of the present invention, the durable life of a pneumatic radial tire may be considerably improved without adverseley affecting various tire performances by improving the carcass ply or belt materials to overcome or at least mitigate cord break-up (CBU) failure mainly resulting from corrosion fatigue failure, particularly by improving the outermost layer of the belt to improve the resistance to corrosion fatigue of the belt cords produced from cracks penetrating through the tread.

Heretofore, there have not been made attempts to study and investigate improvement of corrosion fatigue in steel cords for tires by modifying the internal structure of the material of the steel cord; steel filaments produced through a conventional drawing step are at present used as a material for steel cords.

The present inventors have made studies with respect to the internal structure of the steel material in the steel cord, and have found that in the conventionally produced steel filaments the average value of lamellar distance between cementite layers in steel filaments of pearlite structure is usually about 200—250Å, and that when the average value of lamellar distance is made to be within a range of 300—500Å by optimizing the patenting temperature at the production step of the steel filaments, stress inside the pearlite structure, particularly stress at the end portions of the cementite layers and shearing stress between cementite and ferrite layers, can be reduced to slow corrosion fatigue-crack growth and the durable life of radial tires can be largely improved by using such steel filaments as a material for steel cord.

According to the invention, there is provided a pneumatic radial tire comprising a tread portion, a pair of side portions extending from the tread portion, a pair of bead portions (at the ends of) the side portions remote from the tread portion, a carcass reinforced with a belt embedded in the tread portion, and steel cords being used in at least one of the belt and carcass, each steel cord being obtained by twisting plural steel filaments with a pearlite structure each having a distinct value of a lamellar distance between cementite layers (known from the prior art), wherein the said lamellar distance has an average value of 300—500Å and wherein the steel cord has a tensile strength of not less than 220 kp/mm$^2$.

In a preferred embodiment of the invention, the steel cord applied to at least one of the belt and carcass is covered with a coating rubber having a modulus at 50% elongation of 10—40 kp/cm$^2$.

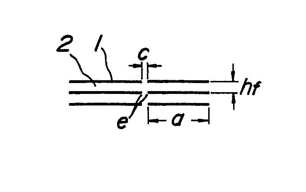

The invention will be further described, by way of example only, with reference to the accompanying drawing, which is a diagrammatic view illustrating cementite layers in steel filament of pearlite structure.

In the drawing is shown a cementite layer 1 of length $a$, and a ferrite layer 2; $c$ is the distance between adjoining cementite ends $e$, and $h_f$ is the lamellar distance between cementite layers.

Cracks due to corrosion fatigue grow through the space between the cementite ends $e$, which is considered to be largely influenced by stress at the cementite ends $e$.

The stress at the cementite end $e$ is represented by the following equation:

$$\sigma_{max} \cong (a/h_f) \cdot (1/c) \tag{1}$$

That is, the longer the cementite length $a$ and the narrower the lamellar distance $h_f$ and cementite end distance $c$, the larger the stress, whereby the advance of corrosion fatique-crack growth is accelerated.

Among factors serving to reduce the stress at the cementite end $c$ ($\sigma_{max}$), the cementite length $a$ and cementite end distance $c$ are difficult to change in accordance with production conditions, while the lamellar distance $h_f$ can be relatively easily changed, for example by changing the patenting temperature in the production step of the steel filaments. In general, the lamellar distance may be increased by raising the patenting temperature, which can effectively reduce the stress at cementite end ($\sigma_{max}$) in the equation (1).

However, when an austenitizing temperature before the patenting is 900—1000°C, if the patenting temperature exceeds 700°C, a uniform pearlite structure cannot be obtained, so that the patenting temperature should be not more than 700°C.

The reason why the lamellar distance in the optimization of the patenting temperature is limited to 300—500Å on average is because when the lamellar distance is less than 300Å, the improvement of corrosion fatigue resistance does not occur satisfactorily, while when the lamellar distance exceeds 500Å, the tensile strength is considerably reduced and the resulting filament cannot be used.

In general, the wider the lamellar distance $h_f$, the lower the tensile strength of the steel filament. In this connection, the present inventors have made further studies and have found that the reduction of the tensile strength can be sufficiently prevented by two operations, one of which being limiting the carbon content of the steel filament to 0.75—0.85% and the other of which being limiting the reduction ratio in the drawing after the patenting to 94—98%.

From the viewpoint of improving the corrosion fatigue resistance, it is advantageous to improve the tensile strength by causing the reduction ratio to approach the upper limit, rather than by increasing the carbon content. Within the range of lamellar distance of 300—500Å, however, the improvement of tensile strength is made possible only by adjusting the reduction ratio in the lamellar distance range of 300—400Å, but the reduction of tensile strength is not sufficiently prevented only by adjusting the reduction ratio in the lamellar distance range of 400—500Å and in this case it is necessary to combine the adjustment of the reduction ratio with increasing the carbon content to 0.75—0.85%.

According to this invention, the steel filament to be used in the steel cord is required to have a tensile strength of not less than 220 (kp/mm². When the tensile strength is less than 220 kp/mm², the reinforcing performance required for tire cord cannot be developed.

Natural rubber or synthetic rubber may be used as a coating rubber for embedding steel cords therein. In particular, when the steel cord made from steel filament having the particular metallic structure in accordance with the invention is used in at least one of the belt and the carcass in a radial tire, the coating rubber preferably has a modulus at 50% elongation of 10—40 kp/cm².

When the modulus at 50% elongation is less than 10 kp/cm², the coating rubber becomes too soft and does not co-operate with the steel cord and consequently strain is largely caused at the end portion of the steel cord to degrade separation resistance at the belt end. On the other hand, when the modulus at 50% elongation exceeds 40 kp/cm², the durability of steel cords for the belt is apt to be degraded, i.e. cord break-up is apt to be caused and also the processability is considerably lowered.

The invention will be further described with reference to the following illustrative Examples.

Example 1

Radial tires to be tested were manufactured wherein the carcass of the test tire was formed of steel cords each made from steel filaments of pearlite structure having an average value of lamellar distance between cementite layers of from 300Å to 500Å. For comparison, there was manufacture a control tire having the same construction as described above except that the lamellar distance was 250Å. Then, the corrosion fatigue resistance was tested with respect to these tires.

The corrision fatigue resistance was evaluated as durable life until occurrence of CBU failure in a drum test under the following conditions after 300 cc of water was encapsulated in the space between an inner liner and a tube in the tire during assembling onto a rim.

| Tire size: | 1000 R 20 14 PR |
| Cord construction: | 3+9×0.23 mm+1 |
| Running condition: | 60 km/hr, |

(Internal pressure 8 kp/cm², JIS 100% load)

The test results are shown together with the lamellar distance and tensile strength of the steel filaments in the following Table 1, wherein the durable life of the tire was expressed by an index on the basis that the control tire is 100. As apparent from Table 1, the durable life is considerably improved in the tires according to the invention.

TABLE 1

|  | Control tire | Test tire | | |
|---|---|---|---|---|
| Tire No. | 1 | 2 | 3 | 4 |
| Lamellar distance (Å) | 250 | 310 | 360 | 400 |
| Tensile strength (kp/mm²) | 280 | 270 | 255 | 240 |
| Durable life (index) | 100 | 140 | 220 | 250 |

Note: All steel filaments had a carbon content of 0.73% and a reduction ratio of 95.0%.

Moreover, the steel cords were embedded in a coating rubber having a modulus at 50% elongation of 24 kp/cm².

The numerical value of the lamellar distance as described in Table 1 was obtained by causing the patenting temperature of the steel filaments prior to the drawing step to be within a range of 500—700°C.

Further, the lamellar distance was confirmed by a transmission type electron microscope of 100 KV und comprised an average value of 100 measured values.

Example 2

Steel filaments having a tensile strength substantially equal to that of the control tire No. 1 were produced by changing the carbon content or the reduction ratio under such conditions that the patenting temperature was optimized so as to make the average value of the lamellar distance within a range of 300—500Å. Then, these steel filaments were used in steel cord for the carcass of the radial tire to manufacture a test tire, the corrosion fatigue resistance of which was evaluated in the same manner as described in Example 1 to obtain a result as shown in the following Table 2.

Moreover, the tire size, cord construction and running conditions were the same as in Example 1.

3

TABLE 2

| | Control tire | Test tire | | | | | |
|---|---|---|---|---|---|---|---|
| Tire No. | 1 | 5 | 6 | 7 | 8 | 9 | 10 |
| Carbon content (wt.%) | 0.73 | 0.78 | 0.82 | 0.85 | 0.73 | 0.73 | 0.73 |
| Reduction ratio (%) | 95.0 | 95.0 | 95.0 | 95.0 | 95.8 | 96.8 | 97.7 |
| Lamellar distance (Å) | 250 | 310 | 355 | 400 | 320 | 360 | 405 |
| Tensile strength (kp/mm$^2$) | 280 | 281 | 278 | 278 | 279 | 280 | 277 |
| Durable life (index) | 100 | 120 | 145 | 160 | 130 | 180 | 220 |

As apparent from Table 2, the durable life of the tires according to the invention is largely improved; in particular it is more effective for the corrosion fatigue resistance that the reduction of tensile strength due to the widening of the lamellar distance is prevented by the increase of reduction ratio rather than the increase of carbon content.

Example 3

Radial tires to be tested were manufactured by applying to an outermost layer of a belt steel cords each made from steel filaments having an average value of lamellar distance between cementite layers of 300—500Å. Then, the corrosion fatigue resistance was measured with respect to these test tires. For comparison there was used a control tire having the same construction as described above except that the lamellar distance was 250Å.

The corrosion fatigue resistance was evaluated by the number of broken cords after the test tire was run on rough road over about 50,000 km. The cord breaking was caused by corrosion fatigue failure due to water content penetrated through cracks in the tread. Therefore, the lower the broken cord number, the better the corrosion fatigue resistance.

The resistance to cord break-up for evaluating the corrosion fatigue resistance was represented as an index according to the following equation by dividing the run tire into four equal parts, optionally taking off tread rubber from the divided part and measuring the number of broken cords at the exposed outermost belt layer:

$$\frac{\text{Number of broken cords in the control tire No. 2}}{\text{Number of broken cords in the test tire}} \times 100$$

The thus obtained results are shown in the following Table 3.

TABLE 3

| | Control tire | Test tire | | |
|---|---|---|---|---|
| Tire No. | 2 | 11 | 12 | 13 |
| Lamellar distance (Å) | 250 | 310 | 360 | 400 |
| Tensile strength (kp/mm$^2$) | 280 | 270 | 255 | 240 |
| Resistance to cord break-up (index) | 100 | 130 | 170 | 210 |

Note: All steel filaments had a carbon content of 0.73% and a reduction ratio of 95.0%.

As apparent from Table 3, according to the invention, the resistance to cord break-up is improved considerably.

In the above test, the tire size was 1000 R 20, the cord construction was 4×4×0.23 mm for high elongation cord, and natural rubber having a modulus at 50% elongation of 31 kp/cm$^2$ was used as the coating rubber.

According to the invention, the lamellar distance between cementite layers is selected to be an appropriate value in the steel filaments of pearlite structure and the tensile strength of the steel filaments is

4

held at a predetermined value, whereby the durable life is considerably improved when such filaments are used as steel cord for tire reinforcement.

**Claims**

1. A pneumatic radial tire comprising a tread portion, a pair of side portions extending from the tread portion, a pair of bead portions at the ends of the side portions remote from the tread portion, a carcass reinforced with a belt embedded in the tread portion and steel cords being used in at least one of the belt and the carcass, each steel cord being obtained by twisting a plurality of steel filaments of a pearlite structure each having a distinct value of lamellar distance ($h_f$) between cementite layers (1), characterized in that the said lamellar distance ($h_f$) has an average value of 300—500Å and wherein the steel cord has a tensile strength of not less than 220 kp/mm². 

2. A tire as claimed in claim 1, characterized in that the said steel cord applied to at least one of the belt and the carcass is covered with a coating rubber having a modulus at 50% elongation of 10—40 kp/cm².

**Patentansprüche**

1. Luftreifen in Radialbauart, mit einer Lauffläche, einem Paar sich von ihr weg erstreckender Seitenwände, einem Paar Wulste an den der Lauffläche entgegengesetzten Enden der Seitenwände, einer mit einem in die Lauffläche eingebetteten Gürtel verstärkten Karkasse, und Corden aus Stahl in wenigstens dem Gürtel oder der Karkasse, wobei jeder Stahlcord durch Verdrillen mehrerer Einzelfäden aus Stahl mit perlitischem Gefüge hergestellt worden ist, von denen jeder einen Lamellenabstand ($h_f$) von einem bestimmten Betrag zwischen Zementitschichten (1) aufweist, dadurch gekennzeichnet, daß der Lamellenabstand ($h_f$) durchschnittlich 300 bis 500Å beträgt und der Cord aus Stahl eine Zugfestigkeit von nicht weniger als 220 kp/mm² hat.

2. Luftreifen nach Anspruch 1, dadurch gekennzeichnet, daß der in wenigstens dem Gürtel oder der Karkasse verwendete Cord aus Stahl mit einem Beschichtungskautschuk überzogen ist, der einen Elastizitätsmodul von 10 bis 40 kp/cm² bei 50% Dehnung hat.

**Revendications**

1. Un bandage pneumatique radial comprenant une bande de roulement, une paire de flancs s'étendant depuis la bande de roulement, une paire de bourrelets aux extrémités des flancs, éloignés de la bande de roulement, une carcasse renforcée par une ceinture noyée dans la bande de roulement, et des câbles en acier utilisés dans au moins la ceinture ou la carcasse, chaque câble en acier étant obtenu par torsion de plusieurs fils en acier ayant une structure de perlite, chacun possédant une valeur distincte de la distance lamellaire ($h_f$) entre les couches en cémentite (1), caractérisé en ce que ladite distance lamellaire ($h_f$) a une valeur moyenne de 300—500Å et dans lequel le câble en acier a une résistance à la traction non inférieure à 220 K$_p$/mm².

2. Um bandage pneumatique selon la revendication 1, caractérisée en ce que ledit câble en acier appliqué à au moins la ceinture ou la carcasse est recouvert d'un caoutchouc de revêtement ayant un module pour un allongement de 50%, de 10—40 K$_p$/cm².